# EUROPEAN PATENT SPECIFICATION

(11) **EP 2 695 868 B1**
(45) Date of publication and mention of the grant of the patent: **09.01.2019**
(21) Application number: 11859942.2
(22) Date of filing: 22.11.2011
(51) Int. Cl.: C04B 35/00, C04B 35/043, C04B 35/101, F27D 1/00, C04B 35/01, C04B 35/16, C04B 35/626, C04B 35/634, C04B 35/66, C04B 35/103, F27B 1/10

(54) **REFRACTORY MATERIAL**
FEUERFESTES MATERIAL
MATÉRIAU RÉFRACTAIRE

(30) Priority: 02.03.2011 JP 2011045251
(43) Date of publication of application: 12.02.2014
(73) Proprietor: Krosakiharima Corporation, Kitakyushu-shi Fukuoka 806-8586 (JP)
(72) Inventor: MISHIMA, Masaaki, Kitakyushu-shi Fukuoka 806-8586 (JP)
(74) Representative: Vossius & Partner Patentanwälte Rechtsanwälte mbB
(86) International application number: PCT/JP2011/076890
(87) International publication number: WO 2012/117626

(56) References cited:
- EP-A1- 0 669 293
- WO-A1-2009/072652
- WO-A1-2010/095637
- DE-A1- 4 039 530
- GB-A- 2 234 502
- JP-A- 5 148 011
- JP-A- 2003 206 185
- JP-A- 2003 206 185
- US-A- 3 684 560
- US-A- 4 280 844
- FUMINORI HIROSE ET AL.: 'The Influence of the Distribution of Al-additive on the Microstructure of MgO-C Refractory' REFRACTORIES vol. 61, no. 3, 01 March 2009, page 124, XP008171321
- SHIZUO ISHIJIMA: 'Aluminium-ko Ganryo no Bussei to Shiyo Tekisei' COATING JIHO no. 152, pages 2 - 9, XP008171328

## Description

### TECHNICAL FIELD

The present invention relates to a refractory material for use in an industrial kiln, particularly, in a pig-iron/steel making process for the iron and steel industry.

### BACKGROUND ART

Generally, a lining of a vessel for holding a molten metal such as molten iron in an industrial kiln, particularly, in a pig-iron/steel making process, or a nozzle or plate for use in a continuous casting process, is formed using a refractory material. Through usage, a refractory material will become worn or damaged. Thus, when expiration of a usable life thereof is determined, it is necessary to demolish or disassemble a used refractory portion or member, and then install a new refractory material to form a lining, or perform replacement with a new refractory member. Along with an increasing need for productivity enhancement, there is an increasing need for extending a durable period of a refractory material so as to shorten a time necessary for demolition/disassembly or lining installation, or a shutdown time during the replacement.

Meanwhile, as a technique for improving durability of a refractory material, it is widely known to mix aluminum in a refractory raw material. While aluminum itself has a melting point of about 660°C, i.e., is melted at a temperature far lower than a usage environmental temperature of 1200 to 1800°C in a pig-iron/steel making process, it reacts with oxygen or nitrogen in an atmosphere to form alumina (Al₂O₃), aluminum nitride (AlN), aluminum oxynitride (AlON), etc., so that the melting point becomes higher, thereby providing enhanced corrosion resistance, and a strong bonding structure is formed in a matrix, thereby providing improvement in strength and thus improvement in abrasion resistance. For example, the following Patent Document 1 discloses a carbon brick for blast furnace produced by preparing a mixture mixed with a metal aluminum powder having an average particle diameter of 25 µm or less, and subjecting the mixture to kneading, shape forming and firing. The following Patent Document 2 discloses a technique of using a composition comprising a refractory powder and additives including a carbon fiber and Si and/or Al, to form a compound of Si and/or Al on the carbon fiber. Patent document 4 discloses a refractory raw material, incorporated with scaly aluminum flakes.

An aluminum powder includes two types: a granular atomized powder and a scaly flake powder. As described in upper right column, page 3 in the following Patent Document 3, the flake powder is excellent in reactivity, so that it is more likely to form strong bonds through a reaction with an atmosphere gas or other refractory raw material. On the other hand, the flake powder is poor in kneadability and formability. Thus, although there are some cases where it actually enhance strength of a refractory material, there are quite a lot of cases where it conversely gives rise to a problem such as a growing deterioration or variation in the strength.

### LIST OF PRIOR ART DOCUMENTS

### [PATENT DOCUMENTS]

Patent Document 1: JP 08-143361A
Patent Document 2: JP 05-078180A
Patent Document 3: JP 57-027968A
Patent Document 4: US 4280844

### SUMMARY OF THE INVENTION

### [TECHNICAL PROBLEM]

The present invention addresses a technical problem of reducing a variation in strength of a refractory material which is obtained by incorporating a scaly flake powder made of aluminum and/or aluminum alloy (hereinafter referred to as "aluminum flakes") into a refractory raw material, and suitable for use in an industrial kiln, particularly, in a pig-iron/steel making process for the iron and steel industry.

### [SOLUTION TO THE TECHNICAL PROBLEM]

Although aluminum flakes are excellent in reactivity, and therefore expected to contribute to enhancement in strength of a refractory material, there have heretofore been quite a lot of cases where it conversely gives rise to a problem, such as decrease or variation in the strength, as mentioned above. The inventors of this application conducted studies on the causes. As a result, it was found that a scaly shape of an aluminum flake causes difficulty in allowing aluminum flakes to be uniformly dispersed during kneading of a refractory raw material mixture, and thus, when a shaped body of the mixture is subjected to a heat treatment, a reaction of the aluminum flakes during the heat treatment is non-uniformly produced. The inventor also found that, during the heat treatment, aluminum undergoes volumetric expansion during a reaction with an atmosphere gas, and thus the shaped body is locally expanded, thereby causing micro-cracks thereinside, which leads to decrease or variation in strength.

As a result of earnest studies on solutions to the above problems, the inventors found that the problems can be solved by using non-leafing type of aluminum flakes, and have accomplished the present invention.

Specifically, according to one aspect of the present invention, there is provided a refractory material which is obtained by incorporating, into a refractory raw material, scaly non-leafing aluminum flakes made of non-leafing type aluminum and/or aluminum alloy.

When the non-leafing aluminum flakes are incorporated into the refractory raw material, needle-like crystals consisting of an aluminum compound and having a length of 2 µm or less are formed on aggregate surfaces (surfaces of aggregate grains) and/or fill a space between neighboring aggregates (voids between aggregate grains). That is, according to another aspect of the present invention, there is provided a refractory material which comprises needle-like crystals consisting of an aluminum compound and having a length of 2 µm or less, and a refractory material which is capable of forming therein needle-like crystals consisting of an aluminum compound and having a length of 2 µm or less, when heated during usage.

The present invention will be described in detail below.

As defined in JIS K5906, as aluminum flakes for paints, there are leafing type and non-leafing type. The leafing type means a powder obtained by subjecting surfaces of aluminum flakes to a treatment using a stearic acid or the like, and has a property of, in a solvent, floating up toward the surface and staying parallel to each other with respect to the surface. On the other hand, the non-leafing type means a powder obtained by subjecting surfaces of aluminum flakes to a treatment using an oleic acid or the like, and has a property of maintaining a uniformly-dispersed state in a solvent.

In an operation for kneading a refractory raw material mixture, it is common practice to add a binder containing a solvent to various types of refractory raw materials, and subject the obtained mixture to kneading. In the present invention, non-leafing type aluminum flakes are kneaded together with a given refractory raw material and a binder containing a solvent. This makes it possible to allow the aluminum flakes to be uniformly dispersed in the solvent and thus more uniformly dispersed in the mixture. Then, the mixture obtained in this manner is subjected to shape forming and heat treatment, so that a homogeneous refractory material having a small variation in strength can be obtained.

A refractory material can be roughly classified into: a so-called fired refractory material obtained by firing refractory raw material particles together through a heat treatment, or by firing refractory raw material so as to form carbon bonds based on a carbon residue of a resin; and a so-called unfired refractory material which is subjected to a heat treatment at a relatively low temperature of about 100 to 400°C in its product stage in order to harden a resin and remove a solvent used during kneading. In the present invention, with regard to the fired refractory material, a reaction between each non-leafing aluminum flake and an atmosphere during firing is uniformly produced in the entire shaped body, so that a homogeneous refractory material with a small variation in strength is obtained in its product stage, as mentioned above. On the other hand, with regard to the unfired refractory material, in its product stage, aluminum is in an unreacted state. However, during usage, the refractory material is inevitably heated by a contact with molten metal or a high-temperature atmosphere, so that a reaction between the non-leafing aluminum flakes and an internal atmosphere of the refractory material is produced in the same manner as that in the fired refractory material. Therefore, the present invention can achieve its advantageous effects, irrespective of whether a refractory material is a fired type or an unfired type.

The refractory material of the present invention has a feature that a variation in strength is small. A refractory material obtained by subjecting an aluminum-added mixture to shape forming and heat treatment is increased in strength as compared to a refractory material obtained from a mixture without addition of aluminum. Although this tendency becomes prominent particularly when aluminum flakes are used, there is a disadvantage of causing a growing variation in strength, as mentioned above. It is believed that this is because, when using a mixture in which aluminum is non-uniformly dispersed, micro-cracks/defects locally occur during the heat treatment. Such a refractory material having a large variation in strength has a problem that durability thereof become deteriorated or unstable, because, when it is actually used, the micro-cracks/defects are likely to be developed due to thermal stress and mechanical stress during usage, and integrated together to form a large crack, which becomes a factor for flaking, breaking, drop-out, etc. In contrast, in the refractory material of the present invention, aluminum flakes are uniformly dispersed therein, so that the variation in strength becomes smaller, and the durability is stably maintained at a high level.

As non-leafing aluminum flakes usable in the present invention, it is possible to use any commercially available product for paints. As a form, the non-leafing aluminum flakes can be used in both a paste form in which the non-leafing aluminum flakes are preliminarily dispersed in a solvent, and a solvent-free dry form. A chemical composition of the non-leafing aluminum flakes is not particularly limited. For example, in addition to pure aluminum, it is possible to use Al-Si alloy, Al-Mg alloy, Al-Mg-Si alloy and Al-Mg-Ca alloy. Further, a flake size is not particularly limited. However, in view of uniform dispersion, it is preferable to use non-leafing aluminum flakes in which 70 mass% or more thereof have a size passing through a sieve with a mesh opening size of 0.1 mm, which is defined in JIS Z8801. It is more preferable to use non-leafing aluminum flakes in which 70 mass% or more thereof have a size passing through a sieve with a mesh opening size of 44 µm. A thickness is not particularly limited. For example, it is possible to use a type having a thickness of about 0.1 to 5 µm.

Regarding aluminum for use as a refractory raw material, while it is most preferable that it totally consists of non-leafing aluminum flakes, it may consist of any combination of non-leafing aluminum flakes and other type of aluminum or aluminum flakes. However, in view of dominantly achieving the effects of the present invention, it is preferable that the non-leafing aluminum flakes account for 50 mass% or more of the total of aluminum and/or aluminum alloy in the refractory raw material. In the case where aluminum is mixed in a relatively large amount for a refractory material, in such a manner that a total amount of aluminum to be mixed becomes 5 mass% or more, it is preferable to increase the ratio of the non-leafing aluminum flakes.

Any refractory raw material other than aluminum and a binder are not particularly limited. For example, various refractory raw materials and binders commonly used for refractory materials may be used in combination. In one example, the refractory raw material other than aluminum may include alumina, magnesia, mullite, zirconia, spinel, silica and silicon carbide. The binder may include phenolic resin, furan resin, silicone resin, starch and molasses. It is to be noted that, as used in this specification, the term "aluminum" is encompassed within a concept of "refractory raw material", although aluminum has a low melting point and low refractoriness as compared to the aforementioned refractory raw materials such as alumina.

The kneading, shape forming and heat treatment can be performed by facilities and methods commonly used in production of a refractory material. According to need, after the heat treatment, other process such as impregnation treatment and/or (mechanical, chemical or electrical) processing may be performed.

When the shaped body is subjected to firing, the firing may be performed in ambient air, in a reducing atmosphere while embedding the shaped body in coke so as to prevent oxidation of a carbon raw material, or in a nitrogen atmosphere, i.e., in a nitrogen gas. In the reducing atmosphere or nitrogen atmosphere, it is preferable to perform the heat treatment at a temperature of 700°C or more causing aluminum to start a reaction with the atmosphere, in order to allow the non-leafing aluminum flakes to be transformed into nitride or oxynitride, such as AlN or AlON, and form strong bonds. It is particularly preferable to perform the heat treatment at a temperature of 1000°C or more, because, in this case, the reaction of aluminum is particularly promoted.

The present invention more dominantly achieves the effects, particularly, in a thick refractory material. This is because the reaction of aluminum is more likely to become non-uniform along with an increase in thickness of a refractory material. The present invention is effective, particularly, in a refractory material having a thickness of 80 mm or more. One example of the refractory material having a thickness of 80 mm or more is a refractory material for a lining of a blast furnace.

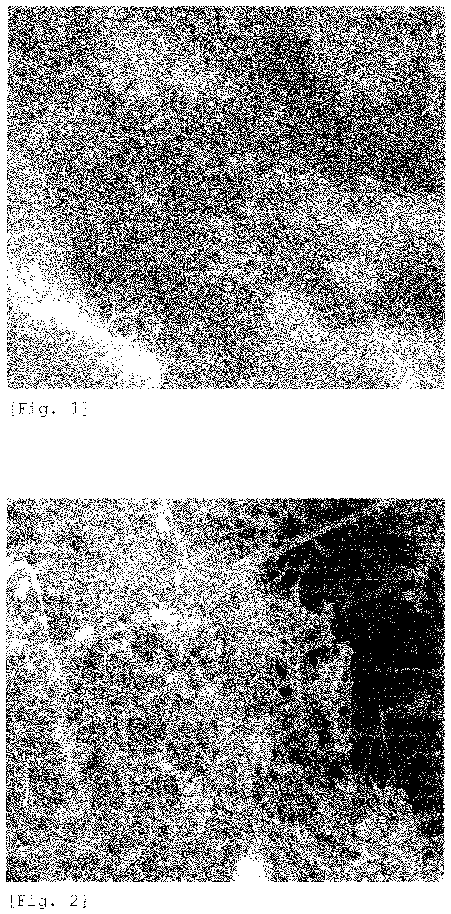

A refractory material using non-leafing type aluminum flakes as in the present invention is characterized in that, when observing a fracture surface thereof by a scanning electron microscope (SEM), needle-like crystals consisting of an aluminum compound and each having a length of 2 µm or less as indicated by FIG. 1 are formed on aggregate surfaces (surfaces of aggregate grains) and/or fill a space between neighboring aggregates (voids between aggregate grains). On the other hand, in a refractory material using leafing type aluminum flakes, needle-like or fiber-like crystals each having a length of about 5 µm are formed as presented in FIG. 2. It is believed that the formation of needle-like crystals each having a relatively short length as in FIG. 1 allows inter-aggregate bonds (bonds between aggregate grains) to become uniform, thereby reducing a variation in strength.

The needle-like crystals are changed in chemical composition depending on an atmosphere for the firing. In this regard, it is preferable to perform the firing in a nitrogen atmosphere, because, in this case, needle-like crystals having a primary mineral phase consisting of AlN are formed, thereby particularly reducing the variation in strength and increasing the strength.

In the case where non-leafing type aluminum flakes and leafing type aluminum flakes are used as a refractory raw material in combination, a microstructure is formed in which needle-like crystals each having a length of 2 µm or less and those of about 5 µm are mixed. In view of achieving the effects of the present invention, it is preferable that the needle-like crystals each having a length of 2 µm or less account for 50 mass% or more of the entire needle-like crystals.

The needle-like crystals can be formed by: kneading a refractory raw material including non-leafing aluminum flakes to obtain a mixture; forming the mixture into a given shape; and subjecting the resulting shaped body to a heat treatment at 700°C or more. On the other hand, with regard to a so-called unfired refractory material, in its production stage, no needle-like crystal is formed. However, when heated during usage, the same needle-like crystals as in the fired refractory material are formed. Thus, a refractory material capable of forming therein needle-like crystals having a length of 2 µm or less when heated during usage is also encompassed within the scope of the present invention.

### [EFFECT OF THE INVENTION]

The refractory material of the present invention can significantly reduce the variation in strength, so that it becomes possible to obtain a refractory material for an industrial kiln with stable and high-level durability.

### BRIEF DESCRIPTION OF THE DRAWINGS

FIG. 1 presents a result of SEM observation on a fracture surface of a refractory material of the present invention using non-leafing type aluminum flakes.
FIG. 2 presents a result of SEM observation on a fracture surface of a refractory material in Comparative Example using leafing type aluminum flakes.

### DESCRIPTION OF EMBODIMENTS

An embodiment of the present invention will now be described based on various examples.

### [EXAMPLES]

As presented in the "Composition Ratio" in Table 1, various types of aluminum flakes were used to check influences of the type and a size of aluminum flakes on a variation of strength of a refractory material.

**TABLE 1**

| | Inventive Example | Inventive Example2 | Inventive Example3 | Inventive Example 4 | Inventive Example 5 | Inventive Example 6 | Inventive Example 7 | Inventive Example 8 | Inventive Example 9 | Comparative Example 1 | Comparative Example 2 |
|---|---|---|---|---|---|---|---|---|---|---|---|
| Composition Ratio | | | | | | | | | | | |
| Fused alumina 3-1mm | 50 | 50 | 50 | 50 | 50 | 50 | 50 | 50 | 50 | 50 | 50 |
| Fused alumina 1-0mm | 20 | 20 | 20 | 20 | 20 | 20 | 20 | 20 | 20 | 20 | 20 |
| Sintered alumina under 0.1 mm | 24 | 24 | 24 | 24 | 24 | 24 | 24 | 24 | 24 | 24 | 24 |
| Non-leafing aluminum flakes(dry type, under 0.2 mm) | 6 | | | | | | | | | | |
| Non-leafing aluminum flakes(dry type, under 0.15 mm) | | 6 | | | 6 | 6 | 4 | 3 | 2 | | |
| Non-leafing aluminum flakes(dry type, under 0.074 mm) | | | 6 | | | | | | | | |
| Non-leafing aluminum flakes(Paste type, alumina content ratio: 50 mass%) | | | | 6 | | | | | | | |
| Leafing aluminum flakes(dry type, under 0.15 mm) | | | | | | | 2 | 3 | 4 | 6 | |
| Leafing aluminum flakes(Paste type, alumina content ratio: 50 mass%) | | | | | | | | | | | 6 |
| Phenolic resin *1 | +4 | +4 | +4 | +4 | | | +4 | +4 | +4 | +4 | +4 |
| Silicone resin *1 | | | | | +4 | | | | | | |
| Molasses *1 | | | | | | +4 | | | | | |
| Thickness of Shaped Body | 150mm | 150mm | 150mm | 150mm | 150mn | 150mm | 150mm | 150mm | 150mm | 150mm | 150mm |
| Conditions of Heat Treatment | | | | | | | | | | | |
| Atmosphere | nitrogen | nitrogen | nitrogen | nitrogen | nitrogen | nitrogen | nitrogen | nitrogen | nitrogen | nitrogen | nitrogen |
| Temperature | 1400°C | 1400°C | 1400°C | 1400°C | 1400°C | 1400°C | 1400°C | 1400°C | 1400°C | 1400°C | 1400°C |
| Variation in Strength of Refractory Material (%) *2 | 15 | 10 | 8 | 9 | 12 | 13 | 12 | 15 | 25 | 167 | 55 |
| Remarks (Appearance of Sintered Body) | | | | | | | | | | Large crack | Micro-crack |

| | | | | | | | | | | | |
|---|---|---|---|---|---|---|---|---|---|---|---|
| *1 Mass% to be added to 100 mass% of a refractory raw material *2 After measuring compressive strength for each sample (n = 10), the variation was calculated using the following formula: (maximum value - minimum value) / average value × 100. A smaller value indicates a smaller (better) variation. | | | | | | | | | | | |

As non-leafing type aluminum flakes (non-leafing aluminum flakes), a dry type in which the aluminum flakes are not dispersed in a solvent was used, and the following three kinds of dry types were prepared: a first dry type having a size of under 0.2 mm; a second dry type having a size of under 0.15 mm: and a third dry type having a size of under 0.074 mm. For example, in the non-leafing aluminum flakes having a size of under 0.15 mm, a ratio of non-leafing type aluminum flakes having a size passing through a sieve with a mesh opening size of 0.1 mm is about 70 mass%. In the non-leafing aluminum flakes having a size of under 0.074 mm, a ratio of non-leafing type aluminum flakes having a size passing through a sieve with a mesh opening size of 0.044 mm is about 70 mass%. As non-leafing aluminum flakes, a paste type in which the aluminum flakes are dispersed in a solvent was also used. The paste type aluminum flakes were obtained by dispersing the above dry type having a size of under 0.15 mm in the ratio of two to one solvent. As leafing type aluminum flakes (leafing aluminum flakes), a dry type having a size of under 0.15 mm, and a paste type prepared using this dry type. As a binder, in addition to a phenolic resin, a silicone resin or molasses was used in a part of the compositions.

The above-mentioned raw materials were weighted according to the composition ratios in Table 1, and, after adding an appropriate amount of solvent thereto, uniformly kneaded by a mixer to obtain a mixture. In Table 1, each composition ratio of the paste type aluminum flakes indicates a solid content. The mixture was formed into a given shape using a hydraulic press at a pressure of 98 MPa to form a shaped body having a thickness of 150 mm. The shaped body was dried at 250°C for 5 hours, and then subj ected to firing in a nitrogen atmosphere at a maximum temperature of 1400°C to prepare a refractory material under test.

In order to check a variation of strength of a refractory material, ten cubic samples each 60 mm on a side were cut out from the refractory material under test, and subjected to measurement of compressive strength based on JIS R2206. Based on the resulting data on compressive strength for the samples (n = 10), the variation in strength was calculated using the following formula: (maximum value - minimum value) / average value × 100. A smaller calculated value means a smaller (better) variation.

Comparing Inventive Examples 1 to 9 with Comparative Examples 1 and 2, it is apparent that each sample of the Inventive Examples has a significantly small variation in strength. It is assumed that, in both of the Comparative Examples, crack occurs in the fired body, and thereby the variation in strength becomes significantly large.

Comparing Inventive Examples 1 to 3 with each other, as the size of the non-leafing aluminum flakes becomes smaller, the variation in strength becomes smaller (better). Table 1 also shows that, even when the non-leafing aluminum flakes are added in a paste form as in Inventive Example 4, a good result can be obtained. In Inventive Examples 5 and 6 as an example in which the binder is changed to a different type, a good result could also be obtained. In Inventive Examples 7 to 9 as an example using a combination of non-leafing type and leafing type, as a ratio of the non-leafing type becomes higher, the variation in strength becomes better, and, particularly when the ratio becomes less than 50 mass%, the effects of the present invention becomes insufficient. Thus, when the combination is used, it is preferable that the non-leafing type is set to account for 50 mass% or more of the combination.

As presented in Table 2, a thickness of the shaped body was changed to check influences of the thickness of the shaped body and a type of aluminum flakes on the variation of strength. A production method for a refractory material under test was fundamentally the same as that in the aforementioned Examples, except for the thickness of the shaped body during shape forming. An evaluation method for the variation in strength was also fundamentally the same as that in the aforementioned Examples, except that when the thickness of the shaped body was set to 50 mm and 30 mm, a length of one side of each cubic sample to be subjected to measurement of compressive strength was set to 50mm and 30mm, respectively.

**TABLE 2**

| | Inventive Example 10 | Inventive Example 11 | Inventive Example 12 | Inventive Example 13 | Comparative Example 3 | Comparative Example 4 | Comparative Example 5 | Comparative Example 6 |
|---|---|---|---|---|---|---|---|---|
| Composition Ratio | | | | | | | | |
| Fused alumina 3-1mm | 50 | 50 | 50 | 50 | 50 | 50 | 50 | 50 |
| Fused alumina 1-0mm | 20 | 20 | 20 | 20 | 20 | 20 | 20 | 20 |
| Sintered alumina under 0.1 mm | 24 | 24 | 24 | 24 | 24 | 24 | 24 | 24 |
| Non-leafing aluminum flakes(dry type, under 0.15 mm) | 6 | 6 | 6 | 6 | | | | |
| Leafing aluminum flakes(dry type, under 0.15 mm) | | | | | 6 | 6 | 6 | 6 |
| Phenolic resin *1 | +4 | +4 | +4 | +4 | +4 | +4 | +4 | +4 |
| Thickness of Shaped Body | 120mm | 80mm | 50mm | 30mm | 120mm | 80mm | 50mm | 30mm |
| Conditions of Heat Treatment | | | | | | | | |
| Atmosphere | nitrogen | nitrogen | nitrogen | nitrogen | nitrogen | nitrogen | nitrogen | nitrogen |
| Temperature | 1400°C | 1400°C | 1400°C | 1400°C | 1400°C | 1400°C | 1400°C | 1400°C |
| Variation in Strength of Refractory Material (%) *2 | 10 | 10 | 9 | 9 | 155 | 123 | 64 | 43 |
| Remarks (Appearance of Sintered Body) | | | | | Large crack | Medium crack | Micro-crack | Micro-crack |

| | | | | | | | | |
|---|---|---|---|---|---|---|---|---|
| *1 Mass% to be added to 100 mass% of a refractory raw material *2 After measuring compressive strength for each sample (n = 10), the variation was calculated using the following formula: (maximum value - minimum value) / average value × 100. A smaller value indicates a smaller (better) variation. | | | | | | | | |

As is evident from Table 2, each sample of Inventive Examples 10 to 13 using non-leafing aluminum flakes has a small variation in strength, irrespective of the thickness of the shaped body. In contrast, each sample of Comparative Examples 3 to 6 using leafing aluminum flakes has a large variation in strength. Particularly when the thickness of the shaped body is 80 mm or more, the variation in strength become significantly large, and there is a large difference from that of Inventive Example which is identical in terms of the thickness of the shaped body. Thus, it is apparent that the present invention achieves a remarkable improvement effect when it is applied to a shaped body having a thickness of 80 mm or more.

As presented in Table 3, an aluminum alloy was used while using a magnesia-graphite based material as a base raw material, to check influences of the changes on the variation of strength. A production method for a refractory material under test was fundamentally the same as that in the aforementioned Examples, except that the heat treatment was performed in atmospheric air at 250°C. Each of an Al-Mg alloy and an Al-Si alloy used as the aluminum alloy contains aluminum in an amount of about 80 mass%. An evaluation method for the variation in strength was also fundamentally the same as that in the aforementioned Examples, except that, taking into account a relatively low heat treatment temperature for a refractory material under test, the measurement of strength was performed after subjecting the refractory material to a heat treatment in a reducing atmosphere at 1400°C for 5 hours, on an assumption that the refractory material is heated during usage.
TABLE 3

| | Inventive Example 14 | Inventive Example 15 | Inventive Example 16 | Comparative Example 7 | Comparative Example 8 | Comparative Example 9 |
|---|---|---|---|---|---|---|
| Composition Ratio | | | | | | |
| Fused magnesia 5-1mm | 50 | 50 | 50 | 50 | 50 | 50 |
| Fused magnesia 1-0mm | 20 | 20 | 20 | 20 | 20 | 20 |
| Fused magnesia under 0.1 mm | 12 | 12 | 12 | 12 | 12 | 12 |
| Flaky graphite under 0.5 mm | 13 | 13 | 13 | 13 | 13 | 13 |
| Pitch powder(softening point: 120°C, under 0.1 mm) | 2 | 2 | 2 | 2 | 2 | 2 |
| Non-leafing aluminum flakes (Al) (dry type, under 0.15 mm) | 3 | | | | | |
| Non-leafing aluminum flakes (Al-Mg alloy) (dry type, under 0.15 mm) | | 3 | | | | |
| Non-leafing aluminum flakes (Al-Si alloy) (dry type, under 0.15 mm) | | | 3 | | | |
| Leafing aluminum flakes (Al) (dry type, under 0.15 mm) | | | | 3 | | |
| Leafing aluminum flakes (Al-Mg alloy) (dry type, under 0.15 mm) | | | | | 3 | |
| Leafing aluminum flakes (Al-Si alloy) (dry type, under 0.15 mm) | | | | | | 3 |
| Phenolic resin *1 | +3 | +3 | +3 | +3 | +3 | +3 |
| Thickness of Shaped Body | 120mm | 120mm | 120mm | 120mm | 120mm | 120mm |
| Conditions of Heat Treatment | | | | | | |
| Atmosphere | atmospheric air | atmospheric air | atmospheric air | atmospheric air | atmospheric air | atmospheric air |
| Temperature | 250°C | 250°C | 250°C | 250°C | 250°C | 250°C |
| Variation in Strength of Refractory Material (% *2 | 8 | 9 | 9 | 38 | 34 | 31 |
| Remarks (Appearance of Sintered Body) | | | | Micro-crack | Micro-crack | Micro-crack |

| | | | | | | |
|---|---|---|---|---|---|---|
| *1 Mass% to be added to 100 mass% of a refractory raw material *2 After measuring compressive strength for each sample (n =10) of a refractory material subjected to a heat treatment in a reducing atmosphere at 1400°C for 5 hours, the variation was calculated using the following formula: (maximum value - minimum value) / average value × 100. A smaller value indicates a smaller (better) variation. | | | | | | |

As is evident from Table 3, it is apparent that, as long as the aluminum flakes are the non-leafing type, the variation in strength is significantly small, irrespective of whether the aluminum flakes are made of simple aluminum or an aluminum alloy.

As presented in Table 4, an addition amount of aluminum was reduced while using an alumina-silica-graphite based material as a base raw material, to check influences of the changes on the variation of strength. A production method for a refractory material under test was fundamentally the same as that in the aforementioned Examples, except that the heat treatment was performed in a reducing atmosphere at 1000°C. An evaluation method for the variation in strength was the same as that described in connection with Table 1.

**TABLE 4**

| | Inventive Example 17 | Inventive Example 18 | Inventive Example 19 | Comparative Example 10 | Comparative Example 11 | Comparative Example 12 |
|---|---|---|---|---|---|---|
| Composition Ratio | | | | | | |
| Fused alumina 0.5-0mm | 25 | 25 | 25 | 25 | 25 | 25 |
| Fused alumina under 0.074 mm | 28 | 29 | 29,5 | 28 | 29 | 29,5 |
| Fused silica 0.5-0.1mm | 20 | 20 | 20 | 20 | 20 | 20 |
| Flaky graphite under 0.5 mm | 25 | 25 | 25 | 25 | 25 | 25 |
| Non-leafing aluminum flakes(dry type, under 0.15 mm) | 2 | 1 | 0,5 | | | |
| Leafing aluminum flakes (dry type, under 0.15 mm) | | | | 2 | 1 | 0,5 |
| Phenolic resin *1 | +8 | +8 | +8 | +8 | +8 | +8 |
| Thickness of Shaped Body | 120mm | 120mm | 120mm | 120mm | 120mm | 120mm |
| Conditions of Heat Treatment | | | | | | |
| Atmosphere | reducing atmosphere | reducing atmosphere | reducing atmosphere | reducing atmosphere | reducing atmosphere | reducing atmosphere |
| Temperature | 1000°C | 1000°C | 1000°C | 1000°C | 1000°C | 1000°C |
| Variation in Strength of Refractory Material (%) *2 | 8 | 6 | 5 | 22 | 16 | 14 |
| Remarks (Appearance of Sintered Body) | | | | | | |

| | | | | | | |
|---|---|---|---|---|---|---|
| *1 Mass% to be added to 100 mass% of a refractory raw material *2 After measuring compressive strength for each sample (n =10), the variation was calculated using the following formula: (maximum value - minimum value) / average value × 100. A smaller value indicates a smaller (better) variation. | | | | | | |

As is evident from Table 4, as the addition amount of aluminum become smaller, the variation of strength becomes smaller in both of the case where the non-leafing type aluminum flakes are used and the case where the leafing type aluminum flakes are used, and a difference between the two cases becomes smaller. However, in two samples of Inventive and Comparative Examples each containing the non-leafing type and the leafing type at the same amount, it is apparent that the sample of the inventive Example exhibits a superior improvement effect. While, in a practical sense, the addition amount of aluminum is appropriately adjusted depending on enquired properties, the present invention achieves excellent effects in any addition amount.

A fracture surface of each sample after measurement of compressive strength for Inventive Examples 2 and 14 and Comparative Examples 1 and 7 was subjected to SEM observation. Among them, each sample of Inventive Example 14 and Comparative Example 7 was subjected to a heat treatment in a reducing atmosphere at 1400°C for 5 hours, as mentioned above. Consequently, a large number of needle-like crystals mostly having a length of 2 µm or less as presented in FIG. 1 were formed on the fracture surface of each sample of Inventive Examples 2 and 14. On the other hand, in each sample of Comparative Examples 1 and 7, a number of needle-like or fiber-like crystals each having a length of about 5 µm were formed as presented in FIG. 2.

## Claims

1. A refractory material obtained by incorporating, into a refractory raw material, scaly non-leafing aluminum flakes made of non-leafing type aluminum and/or aluminum alloy.

2. The refractory material as defined in claim 1, wherein the non-leafing aluminum flakes account for 50 mass% or more of a total of aluminum and/or aluminum alloy in the refractory raw material.

3. The refractory material as defined in claim 1 or 2, wherein 70 mass% or more of the non-leafing aluminum flakes have a size passing through a sieve with a mesh opening size of 0.1 mm.

4. The refractory material as defined in any one of claims 1 to 3, wherein the non-leafing aluminum flakes are incorporated in the refractory material in the form of a paste obtained by dispersing the non-leafing aluminum flakes in an organic solvent.

5. The refractory material as defined in any one of claims 1 to 4, which is capable of forming therein needle-like crystals consisting of an aluminum compound and having a length of 2 µm or less, when heated during usage.

6. The refractory material as defined in any one of claims 1 to 5, which has been subjected to a heat treatment in a reducing atmosphere or nitrogen atmosphere at 700°C or over.

7. The refractory material as defined in claim 6, which comprises needle-like crystals consisting of an aluminum compound and having a length of 2 µm or less.

8. The refractory material as defined in any one of claims 1 to 7, which has a thickness of 80 mm or more.

9. The refractory material as defined in claim 5 or 7, wherein each of the needle-like crystals has a primary mineral phase consisting of AlN.

10. The refractory material as defined in any one of claims 5, 7 and 9, wherein the needle-like crystals which have a length of 2 µm or less account for 50 mass% or more of the entire needle-like crystals.

11. Use of the refractory material as defined in any one of claims 1 to 10, as a refractory material for a lining of a blast furnace.

## Patentansprüche

1. Ein feuerfestes Material, erhalten durch Einschluss von schuppigen nicht-blätternden Aluminiumflocken aus Aluminium und/oder Aluminiumlegierung vom nicht-blätternden Typ in ein feuerfestes Ausgangsmaterial.

2. Das feuerfeste Material wie in Anspruch 1 definiert, wobei die nicht-blätternden Aluminiumflocken 50 Massen-% oder mehr einer Gesamtheit an Aluminium und/oder Aluminiumlegierung in dem feuerfesten Ausgangsmaterial ausmachen.

3. Das feuerfeste Material wie in Anspruch 1 oder 2 definiert, wobei 70 Massen-% oder mehr der nicht-blätternden Aluminiumflocken eine Größe aufweisen, die durch ein Sieb mit einer Maschenöffnungsgröße von 0,1 mm hindurchgeht.

4. Das feuerfeste Material wie in einem der Ansprüche 1 bis 3 definiert, wobei die nicht-blätternden Aluminiumflocken in das feuerfeste Material in Form einer Paste eingeschlossen sind, die durch Dispergieren der nicht-blätternden Aluminiumflocken in einem organischen Lösungsmittel erhalten wird.

5. Das feuerfeste Material wie in einem der Ansprüche 1 bis 4 definiert, welches in der Lage ist, nadelartige Kristalle, die aus einer Aluminiumverbindung bestehen und eine Länge von 2 µm oder weniger aufweisen, darin zu bilden, wenn es während der Verwendung erwärmt wird.

6. Das feuerfeste Material wie in einem der Ansprüche 1 bis 5 definiert, welches einer Wärmebehandlung in einer reduzierenden Atmosphäre oder Stickstoffatmosphäre bei 700°C oder darüber unterzogen wurde.

7. Das feuerfeste Material wie in Anspruch 6 definiert, welches nadelartige Kristalle, die aus einer Aluminiumverbindung bestehen und eine Länge von 2 µm oder weniger aufweisen, umfasst.

8. Das feuerfeste Material wie in einem der Ansprüche 1 bis 7 definiert, welches eine Dicke von 80 mm oder mehr aufweist.

9. Das feuerfeste Material wie in Anspruch 5 oder 7 definiert, wobei jeder der nadelartigen Kristalle eine aus AlN bestehende primäre Mineralphase aufweist.

10. Das feuerfeste Material wie in einem der Ansprüche 5, 7 und 9 definiert, wobei die nadelartigen Kristalle, die eine Länge von 2 µm oder weniger aufweisen, 50 Massen-% oder mehr der gesamten nadelartigen Kristalle ausmachen.

11. Verwendung des feuerfesten Materials wie in einem der Ansprüche 1 bis 10 definiert als ein feuerfestes Material für eine Auskleidung eines Hochofens.

## Revendications

1. Matériau réfractaire obtenu par incorporation, dans un matériau réfractaire brut, de paillettes écailleuses non-feuillantes d'aluminium et/ou d'alliage d'aluminium.

2. Matériau réfractaire selon la revendication 1, dans lequel les paillettes non-feuillantes d'aluminium représentent au moins 50 % en poids d'un total d'aluminium et/ou d'alliage d'aluminium dans le matériau réfractaire brut.

3. Matériau réfractaire selon la revendication 1 ou 2, dans lequel au moins 70 % en poids des paillettes non-feuillantes d'aluminium ont une taille qui passe un tamis avec une dimension d'ouverture de maille de 0,1 mm.

4. Matériau réfractaire selon l'une quelconque des revendications 1 à 3, dans lequel les paillettes non-feuillantes d'aluminium sont incorporées dans le matériau réfractaire sous forme d'une pâte obtenue en dispersant les paillettes non-feuillantes d'aluminium dans un solvant organique.

5. Matériau réfractaire selon l'une quelconque des revendications 1 à 4, capable de former des cristaux en forme d'aiguilles constitués d'un composé d'aluminium et ayant une longueur d'au plus 2 µm quand on les chauffe en cours d'utilisation.

6. Matériau réfractaire selon l'une quelconque des revendications 1 à 5, qui a été soumis à un traitement thermique sous atmosphère réductrice ou atmosphère d'azote à au moins 700°C.

7. Matériau réfractaire selon la revendication 6, qui contient des cristaux en forme d'aiguilles constitués d'un composé d'aluminium et ayant une longueur d'au plus 2 µm.

8. Matériau réfractaire selon l'une quelconque des revendications 1 à 7, qui a une épaisseur d'au moins 80 mm.

9. Matériau réfractaire selon la revendication 5 ou 7, dans lequel chacun des cristaux en forme d'aiguille a une phase minérale primaire constituée d'AlN.

10. Matériau réfractaire selon l'une quelconque des revendications 5, 7 et 9, dans lequel les cristaux en forme d'aiguille qui ont une longueur d'au plus 2 µm représentent au moins 50 % en poids du total de cristaux en forme d'aiguille.

11. Utilisation du matériau réfractaire selon l'une quelconque des revendications 1 à 10 comme matériau réfractaire pour une paroi d'un haut fourneau.
